# FASCICULE DE BREVET EUROPEEN

(11) **EP 0 955 604 B1**
(45) Date de publication et mention de la délivrance du brevet: **27.02.2008**
(21) Numéro de dépôt: 99401062.7
(22) Date de dépôt: 30.04.1999
(51) Int. Cl.: G06K 19/077

(54) **Pièce plate comportant un élément au moins en partie détachable**
Flaches Stück mit einem zumindest teilweise abnehmbaren Element
Flat piece comprising an element at least partially detachable

(30) Priorité: 06.05.1998 FR 9805721
(43) Date de publication de la demande: 10.11.1999
(73) Titulaire: OBERTHUR CARD SYSTEMS SA, 75017 Paris (FR)
(72) Inventeur: Amiot, Lucien, 78350 Jouy en Josas (FR)
(74) Mandataire: Santarelli

(56) Documents cités:
- EP-A- 0 702 325
- DE-A- 19 606 789
- US-A- 4 639 585
- US-A- 4 764 803
- US-A- 5 581 065

## Description

La présente invention concerne une pièce plate comportant un élément au moins en partie détachable du reste de la pièce et présentant une entaille de rupture entre ledit élément et le reste de la pièce. L'invention s'applique en particulier à une carte à microcircuit comportant une zone pouvant être détachée du reste de ladite carte et présentant au moins une entaille de rupture entre ladite zone et le reste de la pièce. Ladite zone contient par exemple le microcircuit de la carte et peut être utilisée soit avec le reste de la carte dans un appareil destiné à cet usage, soit sans le reste de la carte dans un appareil destiné à cet usage.

De telles pièces plates sont connues dans l'art antérieur mais présentent l'inconvénient, soit de voir l'élément se détacher prématurément sous l'effet d'une flexion exercée sur la pièce dans le cas où l'entaille de rupture est suffisamment profonde pour permettre un détachement volontaire aisé de l'élément, soit de nécessiter un effort important pour permettre le détachement volontaire de l'élément dans le cas où l'entaille de rupture est relativement peu profonde pour résister lorsque des efforts de flexion sont exercés sur la carte.

On connaît aussi, du document DE - 196 06 789 qui refléte le préambule de revendication 1, une carte plastique comportant une minicarte qui, au sein de cette carte plastique, est bordée par deux fentes et par deux zones cassables. Dans la carte plastique est prévue une ligne cassable ou pliable qui est presque située dans le prolongement de l'une des zones cassables, ce qui permet un détachement aisé de la minicarte, par pliage selon la ligne et la zone cassable correspondante. Mais une telle configuration présente, comme précédemment, l'inconvénient que l'élément peut se détacher prématurément sous l'effet d'une flexion exercée sur la carte plastique.

L'invention a pour but de remédier à ce problème en permettant à la fois de préserver l'élément d'un détachement involontaire lors d'une flexion exercée sur la carte et de permettre un détachement volontaire aisé de l'élément détachable. Cet but est atteint par la pièce plate selon la revendication 1.

Plus précisément l'invention concerne une pièce plate comportant un élément au moins en partie détachable du reste de la pièce et présentant une entaille de rupture entre ledit élément et le reste de la pièce, caractérisée
en ce qu'elle comporte au moins une entaille de flexion moins profonde que l'entaille de rupture, sensiblement parallèle à ladite entaille de rupture à côté de celle-ci.

La présence d'au moins une entaille de flexion sensiblement parallèle à ladite entaille de rupture (et voisine de celle-ci) fractionne et répartit la contrainte de flexion et permet à la pièce de s'incurver sans rompre l'entaille de rupture ; en outre, lors de l'application d'un effort sur l'élément, l'entaille de rupture se rompt.

La pièce comporte avantageusement plusieurs entailles de flexion sensiblement parallèles à ladite entaille de rupture.

Cette multiplicité d'entailles de flexion permet d'amplifier l'effet de fractionnement de la contrainte de flexion ainsi que la possibilité d'incurvation de la pièce sans rupture de l'entaille de rupture ; en outre, lors de l'application d'un effort sur l'élément, l'entaille de rupture se rompt.

Chaque entaille de flexion est avantageusement moins profonde que l'entaille de rupture, ceci permet d'assurer la rupture au niveau de l'entaille de rupture, lorsque cette rupture est souhaitée.

Dans un mode de réalisation, chaque entaille de flexion est située dans le reste de la pièce.

Dans un mode de réalisation, la pièce présente des fentes entre l'élément et le reste de la pièce.

De telles fentes facilitent le détachement au moins en partie de l'élément par rapport au reste de la pièce, puisqu'il y a moins de matière à rompre grâce aux fentes.

L'invention s'applique en particulier à une carte à microcircuit où ledit élément est une zone détachable.

Dans un mode particulier de réalisation d'une telle carte à microcircuit, cette dernière présente, d'une part, deux fentes entre l'élément et le reste de la pièce, et d'autre part, deux entailles de rupture entre l'élément et le reste de la pièce. Les deux fentes et les deux entailles de rupture définissent l'élément et le reste de la pièce.

Avantageusement, pour chaque entaille de rupture, la carte comporte plusieurs entailles de flexion sensiblement parallèles à ladite entaille de rupture et voisines de celle-ci.

De préférence, la carte définissant un plan la contenant, les deux entailles de rupture et les entailles de flexion comportent chacune deux sillons disposés en vis-à-vis par rapport audit plan.

Ceci facilite la rupture de l'entaille de rupture et favorise la flexion des entailles de flexion.

Une telle carte est par exemple une carte GSM.

D'autres caractéristiques et avantages de l'invention ressortiront de la description suivante d'un exemple d'application de l'invention, donnée à titre illustratif et non limitatif, en référence aux figures schématiques annexées sur lesquelles :
la figure 1 est une vue d'ensemble d'une carte selon l'invention, et
la figure 2 représente la coupe II-II.

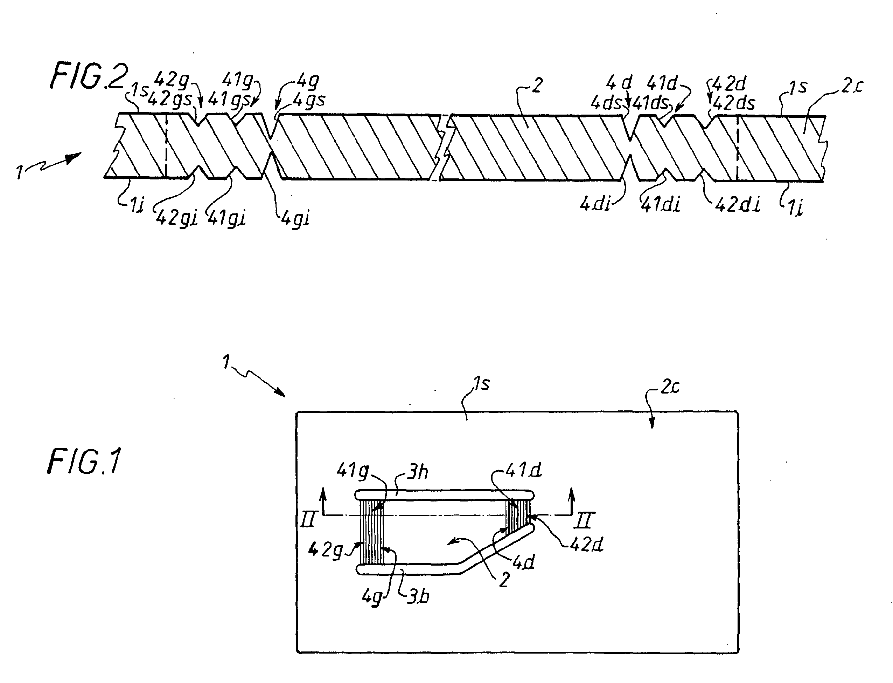

Une carte 1 à microcircuit, en matière plastique, pour GSM comporte une face supérieure 1s et une face inférieure 1i. Cette carte 1 présente deux fentes 3h (en haut sur la figure 1) et 3b (en bas sur la figure 1) débouchantes et deux entailles de rupture 4g (à gauche sur la figure 1) et 4d (à droite sur la figure 1).

L'entaille de rupture 4g (respectivement 4d) comporte un premier sillon 4gs (respectivement 4ds) présent sur la face supérieure 1s de la carte 1 et un deuxième sillon 4gi (respectivement 4di) présent sur la face inférieure 1i de la carte 1. Les deux sillons 4gs et 4gi (respectivement 4ds et 4di) sont en vis-à-vis.

Les deux entailles de rupture 4g et 4d et la fente 3h sont rectilignes. La fente 3b comporte deux portions rectilignes contiguës.

Les deux fentes 3h et 3b et les entailles de rupture 4g et 4d délimitent une zone 2 de la carte et sa zone complémentaire 2c dans la carte 1.

Deux entailles de flexion 41g et 42g (respectivement 41d et 42d) sont disposées à côté de l'entaille de rupture 4g (respectivement 4d), parallèlement à elle. L'entaille de flexion 41g (respectivement 42g, 41d et 42d) comporte un premier sillon 41gs à section en forme de V (respectivement 42gs, 41ds et 42ds) présent sur la face supérieure 1s de la carte 1 et un deuxième sillon 41gi à section en forme de V (respectivement 42gi, 41di et 42di) sur la face inférieure 1i de la carte 1. Les deux sillons 41gs et 41gi (respectivement 41ds et 41di) sont en vis-à-vis ; de même les deux sillons 42gs et 42gi (respectivement 42ds et 42di) sont en vis-à-vis.

Les entailles de flexion 41g et 42g (respectivement 41d et 42d) sont rectilignes et s'étendent sensiblement sur la même longueur que l'entaille de rupture 4g (respectivement 4d) ; elles sont présentes dans la zone complémentaire 2c de la carte 1. Ces entailles de flexion 41g et 42g (respectivement 41d et 42d) sont moins profondes (figure 2) que l'entaille de rupture 4g (respectivement 4d). Toutes les entailles débouchent par leurs deux extrémités dans les fentes 3h et 3b.

La zone 2 est complètement détachable du reste de la carte 1, c'est-à-dire de la zone complémentaire 2c. En effet, en exerçant un effort manuel sur la zone 2, les entailles de rupture 4g et 4d se rompent et détachent ainsi la zone 2 du reste de la carte.

Une telle carte est en outre résistante aux efforts de flexion. En effet les entailles de flexion fractionnent une contrainte de flexion appliquée à la carte.

Les entailles de flexion convenablement réalisées permettent à la zone 2 de résister à des efforts de flexion tels que ceux imposés dans les tests de résistance à la flexion décrits dans les normes ISO 78161-2 et ISO 10373 ; en outre le détachement manuel volontaire de la zone 2 est aisément réalisable en raison de la présence de l'entaille de rupture qui est suffisamment profonde.

Selon un mode de réalisation non représenté, la carte présente une ou plusieurs entailles de flexion à côté d'une entaille de rupture.

Dans un mode de réalisation non représenté, la fente 3h et/ou la fente 3b sont remplacées par des entailles de rupture analogues aux entailles de rupture 4g et 4d et présentent des entailles de flexion analogues aux entailles précédemment décrites. Dans ce mode de réalisation les extrémités des entailles de rupture se raboutent ; les extrémités des entailles de flexion se raboutent et se présentent, en vue de dessus de la carte, sous forme de cadres concentriques.

Selon un mode de réalisation non représenté les entailles de rupture et les entailles de flexion ne comportent qu'un seul sillon.

Selon un mode de réalisation non représenté, l'entaille de rupture 4d est remplacée par une entaille de pliage adaptée à permettre le pliage de la zone 2 sur ou sous la carte lorsque l'entaille de rupture 4g est rompue. L'invention s'applique à l'entaille de rupture 4g, les entailles de flexion 41d et 42d n'étant pas présents dans ce mode de réalisation. La zone 2 reste ainsi, dans ce mode de réalisation, solidaire du reste de la pièce ; elle n'est détachable qu'en partie.

Par exemple, chaque entaille de rupture ou de flexion peut n'être constituée que par un unique sillon pratiqué sur l'une ou l'autre des faces de la carte. Selon une autre possibilité, les sillons des deux faces peuvent être, non plus en vis-à-vis comme représenté, mais décalés en quinconce d'une face à l'autre.

Les entailles de flexion ou de rupture ne débouchent pas obligatoirement dans les fentes 3h et 3b. Elles peuvent s'étendre au-delà de celles-ci. Elles peuvent aussi former une configuration de flexion entourant complètement l'élément détachable, au-delà des fentes.

En d'autres termes et plus généralement, l'invention concerne ainsi toute pièce plate comportant un élément au moins en partie détachable, cet élément étant protégé des contraintes de flexion par un agencement d'entailles de flexion, comme définies ci-dessus, l'entourant au moins partiellement.

L'invention s'applique également pour une pièce plate présentant plusieurs éléments au moins en partie détachables.

## Revendications

1. Pièce plate comportant un élément (2) au moins en partie détachable du reste de la pièce et présentant une entaille de rupture (4g, 4d) entre ledit élément et le reste de la pièce, **caractérisée en ce qu'**elle comporte au moins une entaille de flexion (41g, 42g-41d, 42d) moins profonde que l'entaille de rupture, sensiblement parallèle à ladite entaille de rupture à côté de celle-ci.

2. Pièce selon la revendication 1, **caractérisée en ce qu'**une telle entaille de flexion, disposée au voisinage d'une entaille de rupture, s'étend approximativement sur la même longueur que celle-ci.

3. Pièce selon l'une quelconque des revendications 1 à 2, **caractérisée en ce qu'**elle comporte plusieurs entailles de flexion (41g,42g-41 d,42d) sensiblement parallèles à l'entaille de rupture.

4. Pièce selon l'une quelconque des revendications 1 à 3, **caractérisée en ce que** chaque entaille de flexion est située dans le reste de la pièce.

5. Pièce selon l'une quelconque des revendications 1 à 4, **caractérisée en ce qu'**elle présente des fentes (3h, 3b) entre l'élément et le reste de la pièce.

6. Pièce selon la revendication 5, **caractérisée en ce que** chaque entaille de flexion débouche par ses deux extrémités dans les fentes.

7. Pièce selon l'une quelconque des revendications 1 à 6, **caractérisée en ce qu'**elle est une carte à microcircuit où ledit élément est une zone détachable.

8. Pièce selon la revendication 7, **caractérisée en ce qu'**elle présente, d'une part, deux fentes (3h, 3b) entre l'élément et le reste de la pièce, et d'autre part, deux entailles de rupture (4g, 4d) entre l'élément et le reste de la pièce, les deux fentes et les deux entailles de rupture définissant l'élément et le reste de la pièce.

9. Pièce selon la revendication 8, **caractérisée en ce qu'**elle comporte pour chaque entaille de rupture plusieurs entailles de flexion sensiblement parallèles à ladite entaille de rupture.

10. Pièce selon l'une quelconque des revendications 7 à 9, **caractérisée en ce que**, la carte définissant un plan la contenant, les deux entailles de rupture et les entailles de flexion comportent chacun deux sillons disposés en vis-à-vis par rapport audit plan.

11. Pièce selon la revendication 1, **caractérisée en ce que** ledit élément est protégé des contraintes de flexion par un agencement d'entailles de flexion l'entourant au moins partiellement.

12. Pièce selon l'une quelconque des revendications 7 à 11, **caractérisée en ce qu'**elle est une carte GSM.

## Claims

1. Flat part including an element (2) at least partly detachable from the rest of the part and including a breaking score line (4g, 4d) between said element and the rest of the part, **characterised in that** it includes at least one bending score line (41g, 42g-41d, 42d) shallower than the breaking score line, beside and substantially parallel to said breaking score line.

2. Part according to claim 1, **characterised in that** such a bending score line, disposed in the vicinity of a breaking score line, extends over approximately the same length thereas.

3. Part according to either of claims 1 and 2, **characterised in that** it includes a plurality of bending score lines (41g, 42g-41d, 42d) substantially parallel to the breaking score line.

4. Part according to any one of claims 1 to 3, **characterised in that** each bending score line is situated in the rest of the part.

5. Part according to any one of claims 1 to 4, **characterised in that** it has slots (3h, 3b) between the element and the rest of the part.

6. Part according to claim 5, **characterised in that** each bending score line opens into the slots at both ends.

7. Part according to any one of claims 1 to 6, **characterised in that** it is a microcircuit card in which said element is a detachable zone.

8. Part according to claim 7, **characterised in that** it has, on the one hand, two slots (3h, 3b) between the element and the rest of the part and, on the other hand, two breaking score lines (4g, 4d) between the element and the rest of the part, the two slots and the two breaking score lines defining the element and the rest of the part.

9. Part according to claim 8, **characterised in that** it includes for each breaking score line a plurality of bending score lines substantially parallel to said breaking score line.

10. Part according to any one of claims 7 to 9, **characterised in that**, the card defining a plane containing it, the two breaking score lines and the bending score lines each include two grooves disposed face-to-face relative to said plane.

11. Part according to claim 1, **characterised in that** said element is protected from bending stresses by an arrangement of bending score lines at least partially surrounding it.

12. Part according to any one of claims 7 to 11, **characterised in that** it is a GSM card.

## Patentansprüche

1. Flaches Stück, umfassend ein Element (2), welches wenigstens teilweise von dem Rest des Stücks abnehmbar ist und eine Bruchvertiefung bzw. -einschnitt bzw. Sollbruchstelle (4g, 4d) zwischen dem Element und dem Rest des Stücks aufweist, **dadurch gekennzeichnet, daß** es wenigstens eine Biegevertiefung bzw. -einschnitt (41 g, 42g-41 d, 42d) weniger tief als die Bruchvertiefung im wesentlichen parallel zu der Bruchvertiefung auf einer Seite derselben aufweist.

2. Stück nach Anspruch 1, **dadurch gekennzeichnet, daß** sich eine derartige Biegevertiefung, die in der Nachbarschaft einer Bruchvertiefung angeordnet ist, in etwa über dieselbe Länge wie dieselbe erstreckt.

3. Stück nach einem der Ansprüche 1 bis 2, **dadurch gekennzeichnet, daß** es mehrere Biegevertiefungen bzw. -einschnitte (41g, 42g-41d, 42d) im wesentlichen parallel zu der Bruchvertiefung umfaßt.

4. Stück nach einem der Ansprüche 1 bis 3, **dadurch gekennzeichnet, daß** jede Biegevertiefung auf dem Rest des Stücks angeordnet ist.

5. Stück nach einem der Ansprüche 1 bis 4, **dadurch gekennzeichnet, daß** es Schlitze bzw. Spalten (3h, 3b) zwischen dem Element und dem Rest des Stücks aufweist.

6. Stück nach Anspruch 5, **dadurch gekennzeichnet, daß** jede Biegevertiefung mit ihren zwei Enden in den Schlitzen mündet.

7. Stück nach einem der Ansprüche 1 bis 6, **dadurch gekennzeichnet, daß** es sich um eine Mikrochipkarte bzw. Mikroschaltungskarte handelt, wo dieses Element eine lösbare bzw. entfernbare Zone ist.

8. Stück nach Anspruch 7, **dadurch gekennzeichnet, daß** es einerseits zwei Schlitze (3h, 3b) zwischen dem Element und dem Rest des Stücks und andererseits zwei Bruchvertiefungen bzw. -einschnitte (4g, 4d) zwischen dem Element und dem Rest des Stücks aufweist, wobei die zwei Schlitze und die zwei Bruchvertiefungen das Element und den Rest des Stücks definieren.

9. Stück nach Anspruch 8, **dadurch gekennzeichnet, daß** es für jede Bruchvertiefung mehrere Biegevertiefungen im wesentlichen parallel zu der Bruchvertiefung aufweist.

10. Stück nach einem der Ansprüche 7 bis 9, **dadurch gekennzeichnet, daß**, wobei die Karte eine diese enthaltende Ebene definiert, die zwei Bruchvertiefungen und die Biegevertiefungen jeweils zwei Rillen bzw. Furchen umfassen, die gegenüberliegend bzw. entgegengesetzt in bezug auf die Ebene angeordnet sind.

11. Stück nach Anspruch 1, **dadurch gekennzeichnet, daß** das Element vor Biegespannungen bzw. -beanspruchungen durch eine Anordnung der Biegevertiefungen geschützt ist, die dieses wenigstens teilweise umgeben.

12. Stück nach einem der Ansprüche 7 bis 11, **dadurch gekennzeichnet, daß** es eine GSM Karte ist.
